(19) **Europäisches Patentamt** / **European Patent Office** / **Office européen des brevets**

(11) **EP 3 180 157 B1**

(12) **EUROPEAN PATENT SPECIFICATION**

(45) Date of publication and mention of the grant of the patent:
**16.09.2020 Bulletin 2020/38**

(51) Int Cl.:
*B23K 35/38* (2006.01)   *B23K 35/02* (2006.01)
*C22C 38/00* (2006.01)   *C22C 38/04* (2006.01)
*C22C 38/08* (2006.01)   *C22C 38/12* (2006.01)
*C22C 38/14* (2006.01)   *C22C 38/16* (2006.01)
*C22C 38/42* (2006.01)   *C22C 38/44* (2006.01)
*C22C 38/46* (2006.01)   *C22C 38/48* (2006.01)
*C22C 38/50* (2006.01)   *C22C 38/52* (2006.01)
*C22C 38/54* (2006.01)   *B23K 35/30* (2006.01)
*C22C 38/02* (2006.01)   *C22C 38/06* (2006.01)

(21) Application number: **15745620.3**

(22) Date of filing: **07.07.2015**

(86) International application number:
**PCT/US2015/039451**

(87) International publication number:
**WO 2016/025101 (18.02.2016 Gazette 2016/07)**

(54) **SYSTEMS AND METHODS FOR LOW-MANGANESE WELDING ALLOYS**

SYSTEME UND VERFAHREN FÜR EINEN SCHWEISSDRAHT MIT GERINGEM MANGANANTEIL

SYSTÈMES ET PROCÉDÉS POUR DES ALLIAGES DE SOUDAGE À FAIBLE TENEUR EN MANGANÈSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.08.2014 US 201414457599**

(43) Date of publication of application:
**21.06.2017 Bulletin 2017/25**

(73) Proprietor: **Hobart Brothers Company Troy, Ohio 45373 (US)**

(72) Inventors:
• **BARHORST, Steven Edward**
 **Glenview, Illinois 60025 (US)**
• **KRIEGER, Kevin M.**
 **Glenview, Illinois 60025 (US)**
• **BUNDY, Joseph C.**
 **Glenview, Illinois 60025 (US)**
• **AMATA, Mario Anthony**
 **Glenview, Illinois 60025 (US)**
• **DUNCAN, Daryl L.**
 **Glenview, Illinois 60025 (US)**
• **FIORE, Susan Renata**
 **Glenview, Illinois 60025 (US)**

(74) Representative: **Trinks, Ole Meissner Bolte Patentanwälte Rechtsanwälte Partnerschaft mbB Postfach 10 26 05 86016 Augsburg (DE)**

(56) References cited:
**WO-A1-2013/177480   WO-A1-2013/177480**
**WO-A2-2014/058725   WO-A2-2014/058725**
**US-A- 4 843 212   US-A- 4 843 212**
**US-A1- 2008 272 100   US-A1- 2014 083 981**
**US-A1- 2014 083 981**

**Description**

BACKGROUND

The present disclosure relates generally to welding alloys and, more specifically, to arc welding consumables that form a weld deposit on a steel workpiece during an arc welding operation.

From WO 2013/177 480 A1 a welding consumable is known comprising less than 1% manganese, strengthening agents and grain control agents Ti, Nb and Zr in a total amount of less than 0,6% and a carbon equivalent of around 0,1. US 2014/083 981 A1 discloses a tubular welding wire for arc welding which is configured to form a weld deposit on a steel workpiece wherein the weld deposit includes less than approximately 2,5% manganese by weight.

Welding is a process that has become ubiquitous in various industries for a variety of applications. For example, welding is often used in applications such as shipbuilding, offshore platform, construction, pipe mills, and so forth. Certain welding techniques (e.g., Gas Metal Arc Welding (GMAW), Gas-shielded Flux Core Arc Welding (FCAW-G), Self-shielded Flux Core Arc Welding (FCAW-S), and Submerged Arc Welding (SAW)), typically employ a welding consumable in the form of welding wire. Other welding techniques (e.g., Shielded Metal Arc Welding (SMAW) and Gas Tungsten Arc Welding (GTAW)) may utilize a welding consumable in the form of a stick or rod. These types of welding consumables may generally provide a supply of filler metal to form the weld deposits on a workpiece.

BRIEF DESCRIPTION

According to the present invention, an arc welding consumable that forms a weld deposit on a steel workpiece during an arc welding operation comprises between 0,65 wt% and 0,85 wt% silicon as strengthening agent; one or more grain control agents selected from the group: niobium, tantalum, titanium, zirconium, and boron, wherein the grain control agents comprise greater than 0,06 wt% and less than 0.6 wt% of the welding consumable; between 0,65 wt% and 0,85 wt% nickel; less than 0,4 wt% manganese; and iron as balance to 100%. A carbon equivalence (CE) of the welding consumable is less than 0.23, according to the Ito and Bessyo carbon equivalence equation; and the welding consumable provides a manganese fume generation rate less than 0.01 grams per minute during a welding operation.

The present invention further discloses a method of forming a weld deposit during a welding operation including advancing a welding consumable as defined above toward a steel workpiece, establishing an arc between a welding electrode and the ssteel workpiece; and melting a portion of the welding consumable and a portion of the structural steel workpiece to form the weld deposit, wherein the welding operation generates less than approximately 0.01 grams of manganese fumes per minute.

Further features are disclosed in the subclaims.

DRAWINGS

These and other features, aspects, and advantages of the present invention will become better understood when the following detailed description is read with reference to the accompanying drawings in which like characters represent like parts throughout the drawings, wherein:

FIG. 1 is a block diagram of a gas metal arc welding (GMAW) system, in accordance with embodiments of the present disclosure;

FIG. 2 is a graph illustrating melt-off rate versus welding current for a series of example welding operations using an embodiment of a solid welding electrode of the present disclosure;

FIG. 3 is a graph illustrating melt-off rate versus wire feed speed for the series of example welding operations using the solid welding electrode embodiment of FIG. 2;

FIG. 4 is a graph illustrating percentage of the electrode converted to fumes versus wire feed speed for the series of example welding operations using the solid welding electrode embodiment of FIG. 2;

FIG. 5 is a graph illustrating welding fume generation rate versus wire feed speed for the series of example welding operations using the solid welding electrode embodiment of FIG. 2; and

FIG. 6 is a graph illustrating manganese welding fume generation rate versus wire feed speed for the series of example welding operations using the solid welding electrode embodiment of FIG. 2.

DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. It should be appreciated that, as used herein, the term "tubular welding electrode" or "tubular welding wire" may refer to any welding wire or electrode having a metal sheath and a granular or powdered core, such as metal-cored or flux-cored welding electrodes. It should be appreciated that the term "tubular," as used herein, may include various shapes of welding wire, including round, elliptical, square, polygonal, or any other suitable shape. It should be appreciated that the phrase "substantially free from/of' with respect to a particular component may refer to the particular component being present in only trace concentrations (e.g., less than approximately 0.01%, less than approximately 0.001%, or less than approximately 0.0001%) or being completely absent (e.g., 0 wt% or below a detection limit).

Present embodiments are directed toward alloys for use in welding applications (e.g., as welding consumables). For example, presently disclosed welding alloys may, in certain embodiments, be formed into solid welding wires (e.g., for use in GMAW or SAW applications). In certain embodiments, the disclosed welding alloys may be formed into wire, cut into lengths, and then coated with a flux to form stick electrodes (e.g., for SMAW applications). In other embodiments, the presently disclosed alloy may be formed into a sheath of a tubular welding wire and filled with a granular core material to yield a flux-cored or metal-cored welding wire (e.g., for FCAW-G or FCAW-S applications). In certain embodiments, the disclosed welding alloys may be formed into wires and cut into lengths of rod for use in Gas Tungsten Arc Welding (GTAW) applications. As such, it may be appreciated that the presently disclosed alloy may be useful for the production of any number of welding consumables.

In particular, the presently disclosed welding alloys have a low manganese content. More specifically, the disclosed welding alloy embodiments include less than approximately 2 wt% manganese, such as less than approximately 1.5 wt% manganese, less than approximately 1 wt% manganese, less than approximately 0.9 wt% manganese, or even only including trace manganese content. Accordingly, as set forth in detail below, the disclosed welding alloys enable the production of welding consumables (e.g., welding wires and rods) that have between approximately 5% and approximately 95% less manganese content than other welding consumables, and these welding consumables enable the production of low-manganese weld deposits and low-manganese welding fumes. Further, the presently disclosed welding alloys are useful for welding structural steel (e.g., mild steel, low-alloy steels, carbon steel, or other suitable structural steel) and non-structural steel (e.g., chrome-moly steel). The presently disclosed welding alloys provide weld deposit properties (e.g., tensile strength, yield strength, etc.) that match or exceed the properties of weld deposits formed using welding consumables having substantially higher manganese content. For example, present embodiments enable the formation of a weld deposit having a manganese content less than approximately 2 wt% that provides a suitable tensile strength (e.g., at least 482.6 GPa, i.e. 70 kilopound per square inch (ksi)) as well as a suitable toughness (e.g., a Charpy V-notch (CVN) toughness at least 2.76 m.kg, i.e. 20 ft-lbs at -28.9 °C, i.e. -20 °F), despite the low-manganese content of the weld deposit.

Furthermore, while the presently disclosed welding alloy may be used in the production of several different types of welding consumables (e.g., filler rods, stick electrodes, flux-cored wires, metal-cored wires, or solid electrodes), certain present embodiments are particularly suited for forming solid welding wires. It may be appreciated that, in general, solid welding wires produce less welding fumes than flux-cored welding wires, and generally provide a clean weld deposit that has little or no slag. In contrast, flux-cored welding wires generally form a weld deposit that includes a slag layer that is typically removed after the welding operation is complete. However, while the removal of the slag layer formed by flux-cored welding wires may consume more operator time post-welding, in certain embodiments, this slag layer may advantageously serve to remove or reduce the concentration of undesirable elements from the weld pool during welding, which may provide greater control over the chemistry of the resulting weld deposit.

As presented below, these weld deposit properties are achieved despite the low manganese content through the inclusion of one or more strengthening agents (e.g., nickel, cobalt, copper, carbon, molybdenum, chromium, vanadium, silicon, and/or boron) and one or more grain control agents (e.g., niobium, tantalum, titanium, zirconium, and/or boron) in the welding alloy. In other words, it is believed that the addition of one or more strengthening agents and/or one or more grain control agents enables satisfactory weld deposit properties to be achieved, in spite of the low-manganese levels, when welding steel workpieces (e.g., structural steel workpieces). Additionally, in certain embodiments, it is believed that including one or more grain control agents (e.g., niobium, tantalum, titanium, zirconium, and/or boron) in the welding alloy also compensates for the lower manganese levels such that satisfactory mechanical properties (e.g., toughness, tensile strength, etc.) of the weld deposit may be attained, despite the relatively low manganese levels, when welding steel workpieces (e.g., structural steel workpieces). Further, as discussed in detail below, the components (e.g., the one or more strengthening agents) are present in the welding alloy in suitable relative concentrations such that the welding alloy has a carbon equivalence value (CE) that is generally less than approximately 0.23 (e.g., between approximately 0.07 and approximately 0.12).

## Welding System

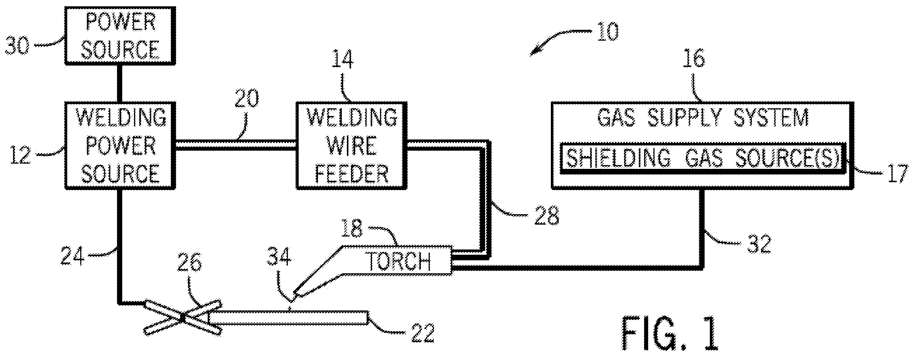

Turning to the figures, FIG. 1 illustrates an embodiment of a gas metal arc welding (GMAW) system 10 that utilizes a welding electrode (e.g., welding wire or a welding stick or rod) manufactured from a welding alloy in accordance with the present disclosure. It should be appreciated that while the present discussion may focus specifically on the GMAW system 10 illustrated in FIG. 1, the presently disclosed welding alloy may benefit a number of different welding processes (e.g., FCAW-S, FCAW-G, GTAW, SAW, or similar welding processes) that use a welding consumable, such as a welding wire or rod. The welding system 10 includes a welding power source 12, a welding wire feeder 14, a gas supply system 16, and a welding torch 18. The welding power source 12 generally supplies power to the welding system 10 and may be coupled to the welding wire feeder 14 via a cable bundle 20. The welding power source 12 may also be coupled to a workpiece 22 using a lead cable 24 having a clamp 26. In the illustrated embodiment, the welding wire feeder 14 is coupled to the welding torch 18 via a cable bundle 28 in order to supply consumable welding wire (e.g., the welding electrode) and power to the welding torch 18 during operation of the welding system 10. In another embodiment, the welding power source 12 may couple and directly supply power to the welding torch 18.

The welding power source 12 may generally include power conversion circuitry that receives input power from an alternating current power source 30 (e.g., an AC power grid, an engine/generator set, or a combination thereof), conditions the input power, and provides DC or AC output power via the cable 20. For example, in certain embodiments, the power source 30 may be a constant voltage (CV) power source 30. The welding power source 12 may power the welding wire feeder 14 that, in turn, powers the welding torch 18, in accordance with demands of the welding system 10. The lead cable 24 terminating in the clamp 26 couples the welding power source 12 to the workpiece 22 to close the circuit between the welding power source 12, the workpiece 22, and the welding torch 18. The welding power source 12 may include circuit elements (e.g., transformers, rectifiers, switches, and so forth) capable of converting the AC input power to a direct current electrode positive (DCEP) output, direct current electrode negative (DCEN) output, DC variable polarity, pulsed DC, or a variable balance (e.g., balanced or unbalanced) AC output, as dictated by the demands of the welding system 10. It should be appreciated that the presently disclosed welding alloy may enable improvements to the welding process (e.g., improved arc stability and/or improved weld quality) for a number of different power configurations.

The illustrated welding system 10 includes a gas supply system 16 that supplies a shielding gas or shielding gas mixtures from one or more shielding gas sources 17 to the welding torch 18. A shielding gas, as used herein, may refer to any gas or mixture of gases (e.g., inert or active gasses) that may be provided to the arc and/or weld pool in order to provide a particular local atmosphere (e.g., to shield the arc, improve arc stability, limit the formation of metal oxides, improve wetting of the metal surfaces, alter the chemistry of the weld deposit, and so forth). In the depicted embodiment, the gas supply system 16 is directly coupled to the welding torch 18 via a gas conduit 32. In another embodiment, the gas supply system 16 may instead be coupled to the wire feeder 14, and the wire feeder 14 may regulate the flow of gas from the gas supply system 16 to the welding torch 18. In other embodiments, such as certain FCAW-S, SMAW and SAW systems that may not rely on an externally supplied shielding gas, the welding system 10 may not include the gas supply system 16. For such embodiments, the welding electrode may include flux (e.g., a flux core or a flux coating) that at least partially decomposes near the surface of the workpiece 22 during a welding operation to provide a localized shielding atmosphere.

In certain embodiments, the shielding gas flow may be a shielding gas or shielding gas mixture (e.g., argon (Ar), helium (He), carbon dioxide ($CO_2$), oxygen ($O_2$), nitrogen ($N_2$), hydrogen ($H_2$), similar suitable shielding gases, or any mixtures thereof). For example, a shielding gas flow (e.g., delivered via the gas conduit 32) may include Ar, $CO_2$, Ar/$CO_2$ mixtures (e.g., 75% Ar and 25% $CO_2$, 90% Ar and 10% $CO_2$, 95% Ar and 5% $CO_2$, and so forth), Ar/$CO_2$/$O_2$ mixtures, Ar/He mixtures, and so forth. Further, it may be appreciated that, as set forth in detail below, certain shielding gases (e.g., certain Ar/$CO_2$ mixtures, such as 90% Ar / 10% $CO_2$) may reduce a total amount of welding fumes that may be generated during the welding operation. For example, in certain embodiments, the shielding gas flow may include between approximately 0% and 100% $CO_2$, with the remainder of the shielding gas flow being argon, helium, or another suitable gas. In certain embodiments, shielding gas flows including three or more gases (e.g., trimix) are also presently contemplated. Additionally, in certain embodiments, the shielding gas mixture may be provided to the arc at a rate of approximately 991 litres/hour (35 cubic feet per hour (cfh)) to approximately 1557 litres/hour (55cfh) (e.g., approximately 1133 litres/hour (40 cfh)).

Accordingly, the illustrated welding torch 18 generally receives the welding wire from the welding wire feeder 14, power from the welding power source 12, and a shielding gas flow from the gas supply system 16 in order to perform GMAW of the workpiece 22. In certain embodiments, the welding wire feeder 14 may be a constant speed welding wire feeder 14. During operation, the welding torch 18 may be brought near the workpiece 22 so that an arc 34 may be formed between the consumable welding electrode (i.e., the welding wire exiting a contact tip of the welding torch 18) and the workpiece 22. Additionally, as discussed below, by controlling the composition of the welding wire, the chemical and mechanical properties of the resulting weld may be varied. For example, in certain embodiments, the welding wire may include alloying components to contribute species (e.g., nickel, molybdenum, silicon, carbon, or other suitable alloying components) to the weld pool, affecting the mechanical properties (e.g., strength and toughness) of the weld. Furthermore, certain components of the welding wire may also provide additional shielding atmosphere near the arc, affect the transfer properties of the arc, clean the surface of the workpiece, and so forth.

**Welding Alloy Compositions**

As discussed in detail below, the presently disclosed welding alloys may include a number of components. While these components may be grouped into various categories (e.g., alloying agents, strengthening agents, grain control agents, deoxidizing agents, and so forth), it should be appreciated that certain components may serve multiple roles during the welding process. As such, it may be appreciated that a disclosure herein of a particular component serving a particular role does not preclude that component from serving other roles or performing other functions during the welding process. For example, as set forth below, in certain embodiments, the disclosed welding alloy may include strengthening agents (i.e., nickel, cobalt, copper, carbon, molybdenum, chromium, vanadium, silicon, boron, or combinations thereof) and/or grain control agents (i.e., niobium, tantalum, titanium, zirconium, boron, or combinations thereof) in order to produce a weld deposit having suitable mechanical properties (e.g., suitable tensile strength and toughness for structural steel applications).

**Table 1.** Chemical composition for two disclosed classes of welding alloys (A2 and A3), in accordance with embodiments of the present approach, whereas A1 discloses a comparative example which does not form part of the present invention. Values are listed in terms of weight percent (wt%) relative to the total weight of the alloy.

|  | A1 (wt%) | A2 (wt%) | A3 (wt%) |
|---|---|---|---|
| **Carbon** | 0.001 - 0.12 | 0.05 - 0.07 | 0.04 - 0.06 |
| **Manganese** | 0.05 - 2 | 0.3 - 0.4 | 0.3 - 0.4 |
| **Silicon** | 0.1 - 1.2 | 0.65 - 0.85 | 0.65 - 0.85 |
| **Nickel** | 0 - 5.0 | 0.65 - 0.85 | 0.65 - 0.85 |
| **Cobalt** | 0 - 2 | 0.001 - 0.7 | 0.001 - 0.7 |
| **Chromium** | 0 - 0.8 | 0.001 - 0.2 | 0.001 - 0.2 |
| **Molybdenum** | 0 - 1.5 | 0.001 - 0.1 | 0.001 - 0.1 |
| **Vanadium** | 0 - 0.1 | 0.0001 - 0.03 | 0.0001 - 0.03 |
| **Copper** | 0.001 - 2 | 0.001 - 0.2 | 0.1 - 0.2 |
| **Titanium** | 0.01 - 0.2 | 0.04 - 0.16 | 0.04 - 0.16 |
| **Zirconium** | 0.01 - 0.2 | 0.02 - 0.1 | 0.02 - 0.1 |
| **Aluminum** | 0.001 - 1 | 0.05 - 0.1 | 0.001 - 0.01 |
| **Niobium** | 0 - 0.1 | 0.001 - 0.1 | 0.001 - 0.01 |
| **Tantalum** | 0 - 0.2 | 0.001 - 0.2 | 0.001 - 0.2 |
| **Boron** | 0 - 0.01 | 0.0001 - 0.001 | 0.0001 - 0.001 |
| **Antimony** | 0 - 0.25 | 0 - 0.25 | 0 - 0.25 |
| **Sulfur** | 0 - 0.01 | 0.001 - 0.01 | 0.001 - 0.01 |
| **Phosphorus** | 0 - 0.01 | 0.001 - 0.01 | 0.001 - 0.01 |
| **Iron** | Balance (~84-99) | Balance (~96-98) | Balance (~96-98) |

With the foregoing in mind, Table 1 presents chemical compositions (i.e., ranges in weight percent) for three classes of welding alloys, A1, A2, and A3, in accordance with embodiments of the present approach. It may be appreciated that the welding alloy A1 defines the broadest ranges for the various components and, accordingly, represents the broadest class of the presently disclosed welding alloy embodiments. Further, welding alloys A2 and A3 represent two subclasses or genuses that generally fall within the A1 class and, accordingly, define more narrow ranges for each of the components of the presently disclosed welding alloy embodiments. While ranges are listed for the components of the welding alloy classes A1, A2, and A3 in Table 1, it should be appreciated that the disclosed ranges are not limited to that particular class, subclass, or embodiment. Indeed, in certain embodiments, any disclosed component may be included in a welding alloy embodiment of the present approach in any disclosed range, or any subranges thereof, in any combination, not just the combinations indicated for classes A1, A2, and A3 of Table 1. For example, a welding alloy embodiment of the present approach may include approximately 0 wt% (or only trace amounts) nickel (as set forth for A1 in Table 1), include aluminum in a range between approximately 0.05 wt% and approximately 0.1 wt% (as set forth for A2 in Table 1), and include carbon in a range between approximately 0.04 wt% and approximately 0.06 wt% (as set forth for A3 in Table 1). It may be appreciated that, in certain embodiments, each of the elements of Table 1 that are present in the welding alloy may only be substantially present in metallic or elemental form, meaning that the welding alloy may be substantially free from salts or compounds (e.g., oxides, hydroxides, chlorides, etc.) or may only include a small amount of oxides about the outer surface of the welding alloy. Additionally, Table 2 lists the components of two example solid welding wires, E1 and E2, manufactured from embodiments of the presently disclosed welding alloy. As indicated in Table 2, particular components of the solid welding wire embodiments E1 and E2 are listed in weight percentage values that generally fall within the ranges defined by one or more of the classes A1, A2, and A3 set forth in Table 1.

**Table 2.** Chemical composition for two example embodiments of solid welding wires, E1 and E2, manufactured using welding alloys in accordance with the present approach. Values are listed in terms of weight percent (wt%) relative to the total weight of the wire. Values listed as "less than" are present at levels that are at or near the lower detection limit for that component.

|  | E1 (wt%) | E2 (wt%) |
|---|---|---|
| **Carbon** | 0.052 | 0.05 |
| **Manganese** | 0.39 | 0.38 |
| **Silicon** | 0.75 | 0.79 |
| **Nickel** | 0.76 | 0.77 |
| **Chromium** | 0.04 | 0.01 |
| **Molybdenum** | 0.01 | 0.01 |
| **Vanadium** | 0.006 | < 0.001 |
| **Copper** | < 0.01 | 0.15 |
| **Titanium** | 0.11 | 0.09 |
| **Zirconium** | 0.05 | 0.06 |
| **Aluminum** | 0.08 | 0.005 |
| **Niobium** | < 0.001 | < 0.01 |
| **Boron** | < 0.001 | 0.0005 |
| **Sulfur** | 0.005 | 0.01 |
| **Phosphorus** | 0.001 | 0.002 |
| **Iron** | Balance (~98) | Balance (~98) |

As set forth in Table 1, the presently disclosed welding alloy may include between approximately 0.05 wt% and approximately 2 wt% manganese. It may be appreciated that the presence of manganese may generally strengthen the welding alloy. However, as used herein, the term "strengthening agent" is not meant to encompass manganese, but rather encompasses other components (e.g., nickel, cobalt, copper, carbon, molybdenum, chromium, vanadium, silicon, and/or boron) that are incorporated into the weld deposit formed using embodiments the disclosed welding alloy and improve the mechanical properties of the weld deposit, despite the low manganese content. It may be noted, however, that the manganese content is considered when calculating the carbon equivalence (CE) of a particular welding alloy embodiment, as discussed below.

In certain embodiments, the welding alloy may include less than approximately 2 wt% manganese (e.g., less than approximately 1.8 wt%, less than approximately 1.6 wt%, less than approximately 1.4 wt%, or less than approximately 1.2 wt% manganese). In certain embodiments, the welding alloy may include less than approximately 1 wt% manganese (e.g., less than approximately 0.9 wt%, less than approximately 0.8 wt%, less than approximately 0.7 wt%, less than approximately 0.6 wt%, less than approximately 0.5 wt%, or less than approximately 0.4 wt% manganese). More specifically, as indicated in Table 1, in certain embodiments, the welding alloy may include between approximately 0.30 wt% and approximately 0.40 wt% manganese (e.g., approximately 0.38 wt% manganese or approximately 0.39 wt% manganese, as presented in Table 2) or between approximately 0.2 wt% and approximately 0.5 wt% manganese. In other embodiments, the manganese content of the welding alloy may be further reduced, for example, to less than approximately 0.30 wt%, less than approximately 0.25 wt%, less than approximately 0.20 wt%, less than approximately 0.15 wt%, less than approximately 0.10 wt%, less than approximately 0.05 wt%, or to only trace levels. In certain embodiments, the manganese content of the welding alloy may be greater than approximately 0.1 wt%, greater than approximately 0.2 wt%, or greater than approximately 0.3 wt%. In certain embodiments, the welding alloy may be manufactured according to a particular target manganese content (e.g., 0.35 wt%), and the resulting welding alloy may have a manganese content that is approximately equal to the particular target, within a tolerance (e.g., ±25%, ±10%, or ±5%).

In certain embodiments, the manganese content within the welding alloy may be defined based on the desired tensile strength of a weld deposit formed using the welding alloy. For example, in certain embodiments, the welding alloy may include less than or equal to 0.9 wt% manganese and may be capable of forming a weld deposit having a tensile strength between approximately 482.6 GPa (70 ksi) and 620.5 GPa (90 ksi). By further example, in certain embodiments, the welding alloy may include less than or equal to 1.4 wt% manganese and may be capable of forming a weld deposit having a tensile strength between approximately 620.5 GPa (90 ksi) and 827.4 GPa (120 ksi).

**Strengthening Agents**

As mentioned above, the disclosed welding alloy may include one or more strengthening agents to provide a weld deposit having suitable mechanical properties (e.g., tensile strength, toughness), despite the lower manganese content of the welding alloy. In certain embodiments, the one or more strengthening agents may include austenite stabilizers (e.g., nickel, carbon, copper, cobalt, etc.), which typically lower the temperature of the solid phase transition from austenite to ferrite and/or raise the transition temperature from delta ferrite to austenite (e.g., retard the ferrite phase) during formation of the weld deposit. Additionally, in certain embodiments, the strengthening agents may, additionally or alternatively, include one or more of molybdenum, chromium, vanadium, silicon, and boron, which are not generally considered to be austenite stabilizers, but may still improve mechanical properties (e.g., tensile strength, toughness) of the resulting weld deposit, in accordance with the present technique. It may be appreciated that the total, combined amount of strengthening agents present in welding alloy embodiments may also be adjusted to provide a particular carbon equivalency (CE) value or range, as discussed in detail below.

As presented in Table 1, the disclosed welding alloy embodiments generally include between approximately 0 wt% (i.e., none or trace amounts) and approximately 5 wt% nickel as a strengthening agent that may improve the mechanical properties of a weld deposit. In certain embodiments, the welding alloy may include between approximately 0.01 wt% and approximately 5 wt%, between approximately 0.2 wt% and approximately 4 wt%, between approximately 0.3 wt% and approximately 3 wt%, between approximately 0.4 wt% and approximately 2 wt%, or between approximately 0.5 wt% and approximately 1 wt% nickel. More specifically, in certain embodiments, the welding alloy may include between approximately 0.65 wt% and 0.85 wt% nickel (e.g., approximately 0.76 wt% nickel or approximately 0.77 wt% nickel, as presented in Table 2). Further, certain embodiments, the welding alloy may include between approximately 0.35 wt% and approximately 0.45 wt% or between approximately 1.75 wt% and approximately 2.75 wt% nickel. In certain embodiments, a nickel content of the welding alloy may be greater than approximately 0.01 wt%, greater than approximately 0.1 wt%, greater than approximately 0.15 wt%, greater than approximately 0.2 wt%, less than approximately 5 wt%, less than approximately 0.01 wt%, or less than approximately 0.001 wt%.

As also presented in Table 1, the disclosed welding alloy embodiments generally include between approximately 0 wt% (i.e., none or trace amounts) and approximately 2 wt% cobalt as a strengthening agent that may improve the mechanical properties of a weld deposit. For example, in certain embodiments, the welding alloy may include between approximately 0.01 wt% and approximately 2 wt%, between approximately 0.02 wt% and approximately 1.5 wt%, between approximately 0.03 wt% and approximately 1.0 wt%, between approximately 0.04 wt% and approximately 0.8 wt%, or between approximately 0.05 wt% and approximately 0.7 wt% cobalt. In certain embodiments, a cobalt content of the welding alloy may be greater than approximately 0.01 wt%, greater than approximately 0.05 wt%, less than approximately 2 wt%, less than approximately 0.7 wt%, less than approximately 0.01 wt%, or less than approximately 0.001 wt%.

As also presented in Table 1, the disclosed welding alloy embodiments generally include between approximately 0.001 wt% and approximately 2 wt% copper as a strengthening agent that may improve the mechanical properties of a weld deposit. For example, in certain embodiments, the welding alloy may include between approximately 0.001 wt% and approximately 0.7 wt%, between approximately 0.005 wt% and approximately 0.4 wt%, or between approximately 0.01 wt% and approximately 0.2 wt% copper (e.g., approximately 0.15 wt% copper or less than approximately 0.01 wt% copper, as presented in Table 2). In certain embodiments, a copper content of the welding alloy may be greater than approximately 0.05 wt%, less than approximately 2 wt%, less than approximately 0.7 wt%, less than approximately 0.2 wt%, or less than approximately 0.01 wt%.

As also presented in Table 1, the disclosed welding alloy embodiments generally include between 0.001 wt% and approximately 0.12 wt% carbon as a strengthening agent that may improve the mechanical properties of a weld deposit. More specifically, in certain embodiments, the welding alloy may include between approximately 0.04 wt% and approximately 0.07 wt%, or between approximately 0.05 wt% and approximately 0.06 wt% carbon (e.g., approximately 0.05 wt% carbon or approximately 0.052 wt% carbon, as presented in Table 2). In certain embodiments, a carbon content of the welding alloy may be greater than approximately 0.001 wt%, greater than approximately 0.01 wt%, greater than approximately 0.04 wt%, less than approximately 0.12 wt%, less than approximately 0.07 wt%, or less than approximately 0.06 wt%.

As also presented in Table 1, the disclosed welding alloy embodiments generally include between 0 wt% (i.e., none or trace amounts) and approximately 1.5 wt% molybdenum as a strengthening agent (i.e., a non-austenite strengthening agent) that may improve the mechanical properties of a weld deposit. For example, in certain embodiments, the welding alloy may include between approximately 0.001 wt% and approximately 1 wt% or between approximately 0.005 wt% and approximately 0.5 wt% molybdenum (e.g., approximately 0.01 wt% molybdenum, as presented in Table 2). In certain embodiments, the molybdenum content of the welding alloy may be greater than approximately 0.001 wt%, greater than approximately 0.01 wt%, less than approximately 0.1 wt%, or less than approximately 1.5 wt%.

As also presented in Table 1, the disclosed welding alloy embodiments generally include between 0 wt% (i.e., none or trace amounts) and approximately 0.8 wt% chromium as a strengthening agent (i.e., a non-austenite strengthening agent) that may improve the mechanical properties of a weld deposit. For example, in certain embodiments, the welding alloy may include between approximately 0.01 wt% and approximately 0.8 wt% or between approximately 0.01 wt% and approximately 0.2 wt% chromium (e.g., 0.01 wt% or 0.04 wt% chromium). In certain embodiments, the chromium content of the welding alloy may be greater than approximately 0.001 wt%, greater than approximately 0.01 wt%, less than approximately 0.8 wt%, less than approximately 0.2 wt%, or less than approximately 0.1 wt%.

As also presented in Table 1, the disclosed welding alloy embodiments generally include between 0 wt% (i.e., none or trace amounts) and approximately 0.1 wt% vanadium as a strengthening agent (i.e., a non-austenite strengthening agent) that may improve the mechanical properties of a weld deposit. For example, in certain embodiments, the welding alloy may include between approximately 0.0005 wt% and approximately 0.09 wt% or between approximately 0.001 wt% and approximately 0.025 wt% vanadium (e.g., approximately 0.006 wt% vanadium). In certain embodiments, a vanadium content of the welding alloy may be greater than approximately 0.001 wt%, less than approximately 0.1 wt%, less than approximately 0.03 wt%, or less than approximately 0.001 wt%.

As also presented in Table 1, the disclosed welding alloy embodiments generally include between approximately 0.1 wt% and approximately 1.2 wt% silicon. It may be noted that silicon may play more than one role in the formulation of embodiments of the presently disclosed welding alloy. For example, silicon may play a role as a deoxidizer, reacting with oxygen-containing species at or near the weld pool to generate slag. However, the portion of silicon that persists in the weld deposit may also play a role as a strengthening agent (i.e., a non-austenite strengthening agent) to improve the mechanical properties of a weld deposit. As such, the disclosed ranges of silicon in Table 1 include a portion of silicon that is consumed by deoxidation during welding, as well as a portion of silicon that will become incorporated into the weld deposit as a strengthening agent. For example, in certain embodiments, the welding alloy may include between approximately 0.65 wt% and approximately 0.85 wt% silicon (e.g., approximately 0.75 wt% silicon or approximately 0.79 wt% silicon, as presented in Table 2). In certain embodiments, the silicon content of the welding alloy may be greater than approximately 0.1 wt%, greater than approximately 0.65 wt%, less than approximately 0.85 wt%, or less than approximately 1.2 wt%. Silicon content is also discussed below with respect to deoxidizing components of the disclosed welding alloy embodiments.

As also presented in Table 1, the disclosed welding alloy embodiments generally include between approximately 0 wt% (i.e., none or trace amounts) and approximately 0.01 wt% boron. That is, in certain embodiments, boron may not be included in welding alloy embodiments of the present approach without adversely affecting the properties of the welding alloy and/or the resulting weld deposit. However, in certain embodiments, boron may be included in a small amount to improve the mechanical properties of the resulting weld deposit. For example, in certain embodiments, the welding alloy may include between approximately 0.0001 wt% and approximately 0.001 wt% boron (e.g., 0.0005 wt% boron or <0.001 wt% boron, as presented in Table 2). In certain embodiments, the boron content of the welding alloy may be greater than approximately 0.0001 wt%, less than approximately 0.001 wt%, or less than approximately 0.01 wt%. It may be appreciated that boron may be considered both a strengthening agent and a grain control agent, as discussed herein. That is, the amount of boron present in a welding alloy embodiment generally contributes to both the carbon equivalence value and to the total amount of grain control agents, as discussed below.

**Carbon Equivalance (CE)**

As mentioned above, welding alloy embodiments of the present approach generally include certain components, namely manganese and one or more strengthening agents, at suitable levels to provide a particular equivalent carbon content value or range. For example, the disclosed welding alloy embodiments have a particular carbon equivalent (CE) value or range determined according to the Ito and Bessyo method (also known as the critical metal parameter, Pcm) based on the following formula:

$$\text{Eq. 1} \quad CE = \%C + \%Si/30 + (\%Mn + \%Cu + \%Cr)/20 + \%Ni/60 + \%Mo/15 + \%V/10 + 5 \cdot \%B$$

wherein each of the elemental percentages are provided in weight percent relative to the total weight of the welding alloy. For example, in certain embodiments, the welding alloy may have a manganese content less than or equal to 2 wt% (e.g., less than approximately 1 wt% or between 0.3 wt% and 0.4 wt% manganese) and a CE (determined according to equation 1) that is between approximately 0.05 and approximately 0.25. In certain embodiments, the welding alloy may have a CE (determined according to equation 1) that is less than approximately 0.24, less than approximately 0.23, less than approximately 0.22, less than approximately 0.21, less than approximately 0.2, between approximately 0.2 and approximately 0.23, or between approximately 0.08 and approximately 0.23. In certain embodiments, the tubular welding wire 50 may have a CE (determined according to equation 1) selected based on a desired tensile strength. For example, a welding alloy may have a manganese content less than approximately 2 wt% (e.g., less than approximately 1 wt% or between approximately 0.3 wt% and 0.4 wt% manganese) and have CE between approximately 0.2 and approximately 0.23 to provide an estimated tensile strength between approximately 90 ksi and approximately 140 ksi (e.g., approximately 100 ksi). Other embodiments designed to provide a lower estimated tensile strength (e.g., between approximately 70 ksi and approximately 80 ksi) may have a manganese content less than approximately 2 wt% (e.g., less than approximately 1 wt% or between approximately 0.3 wt% and 0.4 wt% manganese) and have a CE value below 0.2, such as between approximately 0.07 and approximately 0.12.

**Grain Control Agents**

As presented in Table 1 above, the disclosed welding alloy embodiments generally include one or more grain control agents that may improve mechanical properties (e.g., tensile strength, toughness) of the resulting weld deposit. In certain embodiments, these grain control agents may include niobium, tantalum, titanium, zirconium, boron, and combinations thereof. Accordingly, in certain embodiments, the welding alloy may include between approximately 0.02 wt% and approximately 2.3 wt%, between approximately 0.02 wt% and approximately 0.6 wt%, between approximately 0.05 wt% and approximately 0.7 wt%, or between approximately 0.06 wt% and approximately 0.6 wt% combined grain control agents. In certain embodiments, the combined grain control agent content of the welding alloy may be greater than approximately 0.02 wt%, greater than approximately 0.06 wt%, less than approximately 0.6 wt%, or less than approximately 0.56 wt%.

As also presented in Table 1, the disclosed welding alloy embodiments generally include between approximately 0 wt% (i.e., none or trace amounts) and approximately 0.1 wt% niobium as a grain control agent that may improve the mechanical properties of the weld deposit. For example, in certain embodiments, the welding alloy may include between approximately 0.001 wt% and approximately 0.1 wt%, between approximately 0.005 wt% and approximately 0.09 wt%, or between approximately 0.01 wt% and approximately 0.08 wt% niobium. In certain embodiments, the niobium content of the welding alloy may be greater than approximately 0.001 wt%, less than approximately 0.15 wt%, less than approximately 0.12 wt%, or less than approximately 0.1 wt%.

As also presented in Table 1, the disclosed welding alloy embodiments generally include between approximately 0 wt% (i.e., none or trace amounts) and approximately 0.2 wt% tantalum as a grain control agent to improve the mechanical properties of the weld deposit. For example, in certain embodiments, the welding alloy may include between approximately 0.001 wt% and approximately 0.2 wt%, between approximately 0.005 wt% and approximately 0.15 wt%, or between approximately 0.01 wt% and approximately 0.1 wt% tantalum. In certain embodiments, a tantalum content of the welding alloy may be greater than approximately 0.001 wt%, less than approximately 0.2 wt%, or less than approximately 0.1 wt%.

As also presented in Table 1, the disclosed welding alloy embodiments generally include between approximately 0.01 wt% and approximately 0.2 wt% titanium. It may be noted that, like silicon discussed above, titanium may play more than one role in the welding operation. For example, titanium may play a role as a deoxidizer, reacting with oxygen-containing species near the weld pool to generate slag, as discussed below. However, the titanium that persists in the weld deposit may also play a role as a grain control agent that may improve the mechanical properties of the weld deposit. As such, the disclosed ranges of titanium in Table 1 include the titanium that will be consumed by deoxidation (e.g., approximately 60%), as well as the titanium that will become incorporated into the weld deposit during welding. For example, in certain embodiments, the welding alloy may include between approximately 0.01 wt% and approximately 0.18 wt%, between approximately 0.04 wt% and approximately 0.16 wt%, or between approximately 0.08 wt% and approximately 0.12 wt% titanium. In certain embodiments, a titanium content of the welding alloy may be greater than approximately 0.01 wt%, greater than approximately 0.08 wt%, less than approximately 0.2 wt%, or less than approximately 0.16 wt%.

As also presented in Table 1, the disclosed welding alloy embodiments generally include between approximately 0.01 wt% and approximately 0.2 wt% zirconium. It may be noted that, like titanium, zirconium may play more than one role in the welding operation. For example, zirconium may play a role as a deoxidizer, reacting with oxygen-containing species near the weld pool to generate slag, as discussed below. However, the zirconium that persists in the weld deposit after welding may also serve as a grain control agent that may improve the mechanical properties of the weld deposit. As such, the disclosed ranges of zirconium in Table 1 include the portion of zirconium that will be consumed by deoxidation (e.g., approximately 60%), as well as the portion zirconium that will become incorporated into the weld deposit, during welding. For example, in certain embodiments, the welding alloy may include between approximately 0.01 wt% and approximately 0.15 wt% or between approximately 0.02 wt% and approximately 0.1 wt% zirconium. In certain embodiments, a zirconium content of the welding alloy may be greater than approximately 0.01 wt%, greater than approximately 0.02 wt%, greater than approximately 0.04 wt%, less than approximately 0.1 wt%, less than approximately 0.08 wt%, or less than approximately 0.02 wt%.

As mentioned above, the amount of boron present a welding alloy embodiment generally contributes both the carbon equivalence (CE) value and to the total amount of grain control agents present in the welding alloy. As presented in Table 1, the disclosed welding alloy embodiments generally include between approximately 0 wt% (i.e., none or trace amounts) and approximately 0.01 wt% boron. For example, in certain embodiments, the welding alloy may include between approximately 0.0001 wt% and approximately 0.001 wt% boron (e.g., 0.0005 wt% boron or <0.001 wt% boron, as presented in Table 2). In certain embodiments, the boron content of the welding alloy may be greater than approximately 0.0001 wt%, less than approximately 0.001 wt%, or less than approximately 0.01 wt%.

## Other Components

Further, as presented in Table 1, in certain embodiments, the solid welding alloy may include deoxidizing components (e.g., titanium, zirconium, aluminum, and silicon) in the indicated ranges. As set forth above, certain deoxidizing components may also serve other roles (e.g., strengthening agents, grain control agents), and these components may be present at levels that enable a suitable portion of these components to become incorporated into the weld deposit to provide these effects. In certain embodiments, antimony may not be included without adversely affecting the present approach; while in other embodiments, antimony (e.g., up to 0.25 wt%) may be useful to tune the properties of the resulting weld deposit. In certain embodiments, the disclosed welding alloy embodiments may include greater than approximately 80 wt% iron (e.g., greater than approximately 83 wt%, greater than approximately 84 wt%, greater than approximately 90 wt%, greater than approximately 95 wt%, greater than approximately 96 wt%, greater than approximately 97 wt%, greater than approximately 98 wt%, greater than approximately 99 wt% iron, or a remainder of iron).

## AWS Standards and Classification

Certain welding electrodes (e.g., welding electrodes manufactured according to the American Welding Society (AWS) A5.18 ER70S-2 standard) for welding structural steels include between 0.9 wt% and 1.4 wt% manganese. By comparison, the ER70S-2 wire contains between approximately 2 and approximately 5 times greater manganese content than certain welding alloy embodiments of the present approach, such as a welding alloy embodiment having between approximately 0.3 wt% and approximately 0.4 wt% manganese. Further, based on the AWS specification, the ER70S-2 wire includes less than or equal to 0.15 wt% nickel. By comparison, certain embodiments of the present approach (e.g., embodiments of the subclass A2 and A3 of Table 1) may contain between approximately 4 and approximately 6 times greater nickel content than the ER70S-2 wire. For example, in certain embodiments, the disclosed welding alloy may include less than approximately 1 wt% manganese (e.g., less than or equal to approximately 0.9 wt% manganese, less than approximately 0.4 wt% manganese) and greater than approximately 0.15 wt% nickel (e.g., greater than approximately 0.16 wt%, greater than approximately 0.18 wt%, greater than approximately 0.2 wt%, greater than approximately 0.25 wt%, or greater than approximately 0.75 wt% nickel).

It may be appreciated that the formulations in Tables 1 and 2 are merely provided as example formulations. In certain embodiments, the presently disclosed low-manganese welding alloy may be used to produce a welding consumable (e.g., a solid welding wire, a stick electrode, or a tubular welding wire) in compliance with the chemical analysis requirements of one or more of the following AWS A5.29, A5.20, and/or A5.36 standards: E71T1-GC H8 (e.g., providing similar weld deposit chemistry and mechanical properties as Element™ 71Ni1C, available from Hobart Brothers Company, Troy, OH); E71T1-GM H8 (e.g., providing similar weld deposit chemistry and mechanical properties as Element™ 71Ni1M, available from Hobart Brothers Company, Troy, OH); E71T-1C H8 (e.g., providing similar weld deposit chemistry and mechanical properties as Element™ 71T1C, available from Hobart Brothers Company, Troy, OH); E71T-1M H8 (e.g., providing similar weld deposit chemistry and mechanical properties as Element™ 71T1M, available from Hobart Brothers Company, Troy, OH); E81T1-GC H8 (e.g., providing similar weld deposit chemistry and mechanical properties as Element™ 81K2C, available from Hobart Brothers Company, Troy, OH); and E81T1-GM H8 (e.g., providing similar weld deposit chemistry and mechanical properties as Element™ 81K2M, available from Hobart Brothers Company, Troy, OH).

**Manufacturing the Welding Alloy and Welding Consumables**

The disclosed welding consumables, including solid welding electrodes, may be formed from a mixture of starting materials or ingredients that may be formed into an alloy using common steel manufacturing processes and techniques. For example, these starting materials may include iron, iron titanium powder, iron zirconium powder, aluminum powder or alumina, as well as other suitable starting materials. For example, in certain embodiments, the starting materials may include one or more materials (e.g., antimony, gallium) set forth in the U.S. Patent Nos. 6,608,284 and 8,119,951, both of which are incorporated by reference herein in their entireties for all purposes. In general, the various starting materials may be heated within a furnace to reach a molten state. Additionally, one or more impurities (e.g., oxides of titanium, zirconium, aluminum, and/or silicon) may be removed from the mixture as slag. Accordingly, after a portion of certain starting materials are oxidized and removed as slag during formation of the welding alloy, the composition of the resulting welding alloy complies with the component ranges for one or more of the classes A1, A2, and A3 indicated in Table 1. Once formed, in certain embodiments, the welding alloy may be shaped into welding wire (as discussed below), into ribbons (e.g., strip cladding for use in strip welding operations), into bars or plates, or any other type of welding consumable used in a welding operation.

In certain embodiments, the welding alloy may be drawn (e.g., using one or more drawing dies) to form a solid wire (e.g., for use in GMAW, GTAW, and SAW applications). Additionally, in certain embodiments, the solid wire may be cut into segments and covered with a coating to produce stick electrodes. Further, in certain embodiments, the welding alloy may be flattened, shaped into a sheath, and filled with a granular core material (e.g., flux) to produce a metal-cored or a flux-cored tubular welding wire. Even further, in certain embodiments, the welding alloy may be disposed on a workpiece and applied via a plating process. It may be appreciated that, for embodiments of welding consumables that include a flux and/or a coating component (e.g., stick electrodes and/or flux-cored tubular welding wire), the chemistry of the weld deposit, the mechanical properties of the weld deposit, the properties of the arc, and so forth, may be also controlled or tuned based on the composition and nature of the flux and/or coating component. In particular, in certain embodiments, the flux and/or coatings used in combination with the disclosed welding alloys (e.g., for SMAW stick electrodes, within flux-cored electrodes, and for SAW flux) may be substantially free or completely free from manganese.

By specific example, in certain embodiments, the disclosed alloys may be used to manufacture SMAW stick electrodes. In an example, a solid wire may be manufactured from the disclosed welding alloys, cut into segments, and coated with flux to produce stick electrodes suitable for SMAW. In this example, the presently disclosed welding alloys enable the delivery of the aforementioned deoxidizers (e.g., zirconium, titanium, aluminum, and/or silicon) to the arc and/or the weld deposit. In certain embodiments, the SMAW stick electrode may be in compliance with the AWS A5.1 or AWS A5.5 (e.g., classified as an Exx18 or an Exx18-Y electrode) and may have a flux coating that is completely free or substantially free from manganese. In certain embodiments, the solid wire segments may be first coated with another metal (e.g., a deposited metal layer or a metal foil) prior to the application of the flux coating to improve adhesion of the flux coating and/or to limit interaction between certain flux components and the solid wire core. In certain embodiments, the flux coating may be basic (e.g., contributes minimal oxygen to the weld deposit) and may include silicon metal powders that are stabilized (e.g., chromated) prior to use.

As mentioned, in certain embodiments, the welding alloy may be drawn to form a solid wire for use in GMAW, GTAW, and SAW applications. Additionally, in certain embodiments, the solid welding wire may be coated with one or more components to facilitate one or more aspects of the welding process. For example, in certain embodiments, the solid welding wire may be manufactured to include a thin copper coating to facilitate feeding of the welding wire. In certain embodiments, this copper coating may be formed electrolytically or via self-deposition in a vacuum. For embodiments that include this copper coating, the composition of the welding alloy may be adjusted such that the composition of the entire welding electrode (including the coating) falls within the disclosed ranges for the disclosed welding alloys (e.g., A1, A2, and/or A3 of Table 1). Furthermore, in certain embodiments, in addition or in alternative to a copper coating, the solid welding wire may include a lubricant (e.g., an oil-based) coating to further facilitate the feeding of the welding wire. Additionally, in certain embodiments, this lubricant coating may include one or more Group I or Group II compounds (e.g., sodium, potassium, lithium, magnesium, calcium, and/or barium salts) that may provide the solid welding wire with arc stabilizing effects during an arc welding operation.

**Weld Deposit**

Table 3 illustrates an expected chemical composition and mechanical properties for weld deposits formed using the solid welding electrode embodiments E1 and E2 of Table 2, which are example welding consumables manufactured from the disclosed welding alloys (e.g., welding alloys A1, A2, or A3 of Table 1). As set forth in Table 3, in certain embodiments, the resulting weld deposits may include less than or equal to 1 wt% manganese (e.g., between approximately 0.3 wt% and approximately 0.4 wt% manganese). In certain embodiments, the weld deposit may include less than approximately 1.25 wt%, less than approximately 1 wt%, less than approximately 0.9 wt%, less than approximately 0.8 wt%, less than approximately 0.7 wt%, less than approximately 0.6 wt%, less than approximately 0.5 wt%, less than approximately 0.4 wt%, less than approximately 0.3 wt%, less than approximately 0.2 wt%, less than approximately 0.1 wt%, or only trace amounts of manganese, based on the manganese content of the welding alloy used to form the weld deposit.

Table 3. Chemical composition (wt%) and mechanical properties for example weld deposits W1, W2, and W3 formed using the solid welding electrode embodiment E1 of Table 2, and weld deposit W4, W5, and W6 formed using the solid welding electrode embodiment E2 of Table 2, deposited on an A36 base plate. Mechanical properties are determined according to AWS A5.18. The "90/10" shielding gas mixture is approximately 90% argon and approximately 10% $CO_2$. All of the weld deposits are formed in a 1g position using a solid wire having a diameter of 1.143 mm (0.045 inches).

| | W1 | W2 | W3 | W4 | W5 | W6 |
|---|---|---|---|---|---|---|
| **Carbon** | 0.068 | 0.065 | 0.068 | 0.077 | 0.083 | 0.067 |
| **Manganese** | 0.304 | 0.375 | 0.361 | 0.344 | 0.335 | 0.28 |
| **Silicon** | 0.485 | 0.528 | 0.543 | 0.541 | 0.503 | 0.343 |
| **Phosphorus** | 0.004 | 0.006 | 0.005 | 0.005 | 0.004 | 0.005 |
| **Sulfur** | 0.009 | 0.011 | 0.01 | 0.007 | 0.006 | 0.006 |
| **Nickel** | 0.735 | 0.632 | 0.646 | 0.665 | 0.651 | 0.671 |
| **Chromium** | 0.03 | 0.029 | 0.027 | 0.021 | 0.024 | 0.027 |
| **Molybdenum** | 0.008 | 0.009 | 0.009 | 0.007 | 0.01 | 0.006 |
| **Vanadium** | 0.001 | 0.002 | 0.001 | 0.003 | 0.002 | 0.001 |
| **Copper** | 0.073 | 0.11 | 0.086 | 0.247 | 0.255 | 0.224 |
| **Titanium** | 0.046 | 0.043 | 0.053 | 0.042 | 0.034 | 0.021 |
| **Zirconium** | 0.01 | 0.01 | 0.015 | 0.009 | 0.007 | 0.003 |
| **Aluminum** | 0.031 | 0.032 | 0.038 | 0.009 | 0.006 | 0.003 |
| **Boron** | 0.0001 | 0.00011 | 0.0001 | 0.0001 | 0.00016 | 0.0001 |
| **Niobium** | 0.001 | 0.001 | 0.001 | 0.001 | 0.001 | 0.001 |
| **Oxygen** | 0.074 | 0.07 | 0.053 | 0.055 | 0.064 | 0.097 |
| **Nitrogen** | 0.004 | 0.0037 | 0.0039 | 0.0039 | 0.005 | 0.0062 |
| **Carbon Equivalance (CE)** | 0.12 | 0.12 | 0.12 | 0.14 | 0.14 | 0.12 |
| | | | | | | |
| **Shielding Gas** | $CO_2$ | $CO_2$ | 90/10 | $CO_2$ | $CO_2$ | $CO_2$ |

(continued)

| | W1 | W2 | W3 | W4 | W5 | W6 |
|---|---|---|---|---|---|---|
| Yield strength (ksi) | 67.6 | 64.1 | 77.4 | 61.4 | 63.7 | 59.9 |
| Tensile strength (ksi) | 77.6 | 74.6 | 87.8 | 76.8 | 76.7 | 72.4 |
| Elongation (% in 2") | 26 | 27.6 | 20.5 | 25.1 | 22.6 | 26.4 |
| Area Reduction % | 62.1 | 67.8 | 47.7 | 58.1 | 50.5 | 59.9 |
| CVN (ft-lbs) at -20 °F | 70.8 | 54.8 | 22 | 93.4 | 36.4 | 34.6 |

As indicated in Table 3, the example weld deposits formed using the disclosed welding alloys include one or more strengthening agents (e.g., nickel, copper, carbon, molybdenum, chromium, vanadium, silicon, and/or boron) and one or more grain control agents (e.g., niobium, tantalum, titanium, and/or zirconium) at particular concentrations that enable the weld deposit to have suitable mechanical properties, despite the lower manganese content. It may be appreciated that, for certain welding operations, such as a TIG welding operation using 100% argon as a shielding gas and a filler rod of the presently disclosed welding alloy, the chemistry of the weld deposit may be substantially the same as the chemistry of the welding alloy, as described in detail above. For example, for certain welding operations, the weld deposit may fall within the ranges defined by the classes A1, A2, or A3 of Table 1, and may include any of the ranges for strengthening agents, grain control agents, carbon equivalency (CE), etc., set forth above for the welding alloy. For other welding operations, such as the GTAW operations used to form the weld deposits W1, W2, W3, W4, and W5 of Table 3, the amounts of one or more components may be altered (e.g., by the chemistry of the base metal or by oxidization), and may therefore be different than the levels of these components in the welding consumable made from the disclosed welding alloy. For example, in certain embodiments, a weld deposit formed using a welding consumable that is an embodiment of the presently disclosed welding alloy may include: a carbon content that is less than approximately 0.12 wt% (e.g., less than approximately 0.07 wt% carbon); a manganese content that is less than approximately 2 wt% (e.g., less than approximately 1 wt%, less than approximately 0.9 wt%, or between approximately 0.3 wt% and approximately 0.4 wt% manganese); a silicon content that is less than approximately 1.2 wt% (e.g., less than approximately 0.6 wt% silicon); a nickel content that is less than approximately 5 wt% (e.g., less than approximately 1 wt%, less than approximately 0.85 wt% nickel); a chromium content that is less than approximately 0.8 wt% (e.g., less than approximately 0.4 wt% chromium); a molybdenum content that is less than approximately 1.5 wt% (e.g., less than approximately 0.01 wt% molybdenum); a vanadium content that is less than approximately 0.1 wt% (e.g., less than approximately 0.03 wt% vanadium); a copper content that is less than approximately 2 wt% (e.g., less than approximately 0.2 wt% copper); a titanium content that is less than approximately 0.2 wt% (e.g., less than approximately 0.06 wt% titanium); a zirconium content that is less than approximately 0.2 wt% zirconium (e.g., less than approximately 0.02 wt% zirconium); an aluminum content less than approximately 1 wt% (e.g., less than approximately 0.04 wt% aluminum); a boron content less than approximately 0.01 wt% (e.g., less than approximately 0.0002 wt% boron); a niobium content that is less than approximately 0.1 wt% (e.g., less than approximately 0.002 wt% niobium); and/or a tantalum content that is less than approximately 0.1 wt% (e.g., less than approximately 0.001 wt% tantalum).

Additionally, Table 3 illustrates examples of the mechanical properties enabled by the presently disclosed welding alloy embodiments, despite the lower manganese content. For example, as presented in Table 3, weld deposits formed using an embodiment of the disclosed welding alloy generally possess a tensile strength that is greater than or equal to 482.6 GPa (70 ksi), despite having a low manganese content (e.g., less than 1 wt% manganese). In certain embodiments, the weld deposit may have a higher tensile strength, such as between approximately 482.6 GPa (70ksi) and 551.6 GPa (80 ksi), between approximately 551.6 GPa (80 ksi) and 620.5 GPa (90 ksi) between approximately 620.5 GPa (90 ksi) and 689.5 GPa (100 ksi) or between approximately 689.5 GPa (100 ksi) and 965.2 GPa (140 ksi). Additionally, as presented in Table 3, weld deposits formed using an embodiment of the disclosed welding alloy generally possess a yield strength that is greater than or equal to 399.9 GPa (58 ksi). In certain embodiments, the weld deposit may have a higher yield strength, such as between approximately 399.9 GPa (58 ksi) and approximately 517.1 GPa (75 ksi). Further, as presented in Table 3, weld deposits formed using an embodiment of the disclosed welding alloy generally possess a Charpy V-notch (CVN) value that is greater than or equal to 2.76 m.kg (20 ft-lbs) at -28.9 °C (-20 °F). In certain embodiments, the weld deposit may have a higher CVN value, such as greater than 4.15 m.kg (30 ft-lbs), greater than 5.53 m.kg (40 ft-lbs), greater than 6.92 m.kg (50 ft-lbs), greater than 8.30 m.kg (60 ft-lbs), or greater than 9.68 m.kg (70ft-lbs).

**Welding Fumes**

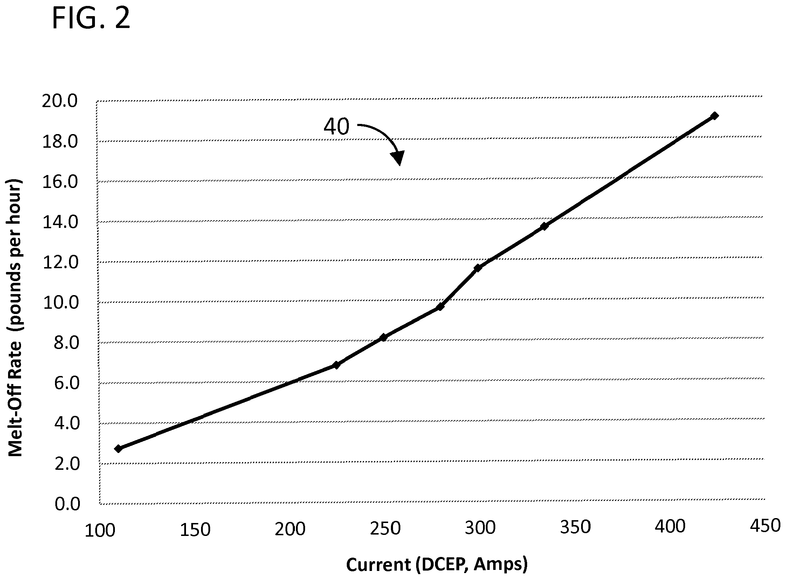

Table 4 includes welding fume data for a series of gas metal arc welding (GMAW) operations using an embodiment of a solid welding wire manufactured from the disclosed A3 welding alloy. The welding fume data of Table 4 is also presented visually in the graphs of FIGS. 2, 3, 4, 5, and 6. While the data of Table 4 and FIGS. 2-6 has been generated using a specific welding consumable embodiment (e.g., E2 solid welding wire of Table 2) of a specific disclosed type of welding alloy (e.g., A3 welding alloy of Table 1), it is believed that the welding fume data presented in Table 4 is representative of other embodiments of welding consumables generally falling within the compositional ranges of the A1 welding alloy of Table 1. Further, while the data of Table 4 was generated using a gas metal arc welding (GMAW) operation, it is believed that the fume data presented in Table 4 is representative of the welding fume data of other welding operations (e.g., submerged arc welding (SAW), shielded metal arc welding (SMAW), or gas tungsten arc welding (GTAW) operations).

**Table 4.** Welding fume data for a series of example welding operations using an embodiment of a solid welding wire made from the disclosed A3 welding alloy (e.g., an embodiment of the disclosed E2 solid welding wire). All welding operations were performed using a 90% argon / 10% $CO_2$ shielding gas mixture. Fume testing was performed in accordance with AWS F1 2 using a bead-on-plate in a horizontal (1F) position with an electrical stick-out of between approximately 12.7 mm and approximately 19.05 mm (between 0.5 and 0.75 inches) and a wire diameter of 1.143 mm (0.045 inches).

| Welding Electrode | Wire Feed Speed (in/min) | Current (A) | Bias (V) | Melt-Off (lbs/hr) | Fume Generation Rate (g/min) | Electrode to fumes | Mn in fumes | Mn Fume Generation Rate (g/min) |
|---|---|---|---|---|---|---|---|---|
| A3 | 100 | 110 | 21 | 6.8036 | 0.134 | 0.65% | 2.50% | 0.00334 |
| | 250 | 225 | 27 | 6.8036 | 0.283 | 0.55% | 1.60% | 0.00453 |
| | 300 | 250 | 28 | 8.1632 | 0.284 | 0.46% | 1.80% | 0.00511 |
| | 355 | 280 | 29 | 9.6558 | 0.434 | 0.59% | 1.30% | 0.00564 |
| | 425 | 300 | 30 | 11.5688 | 0.332 | 0.54% | 1.50% | 0.00498 |
| | 500 | 335 | 31 | 13.6038 | 0.122 | 0.12% | 2.20% | 0.00268 |
| | 700 | 425 | 32 | 19.0382 | 0.101 | 0.07% | 6.40% | 0.00644 |

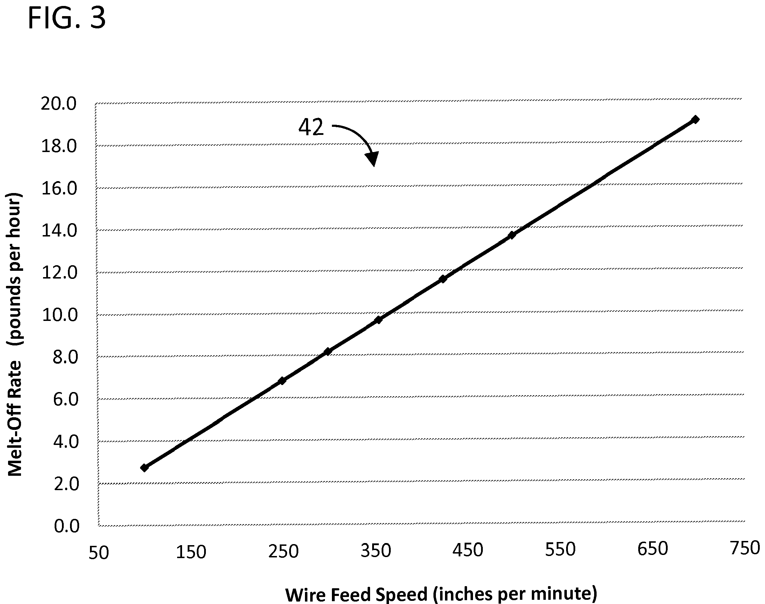

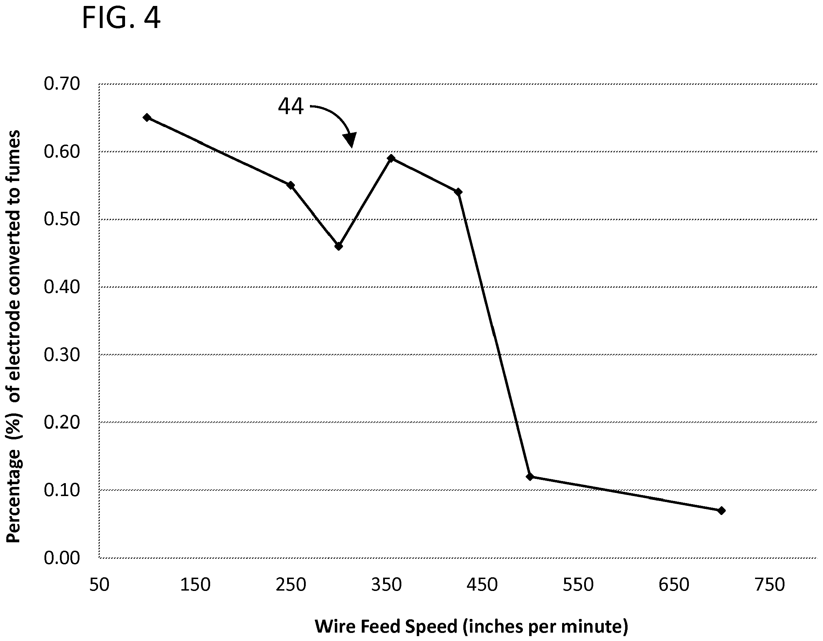

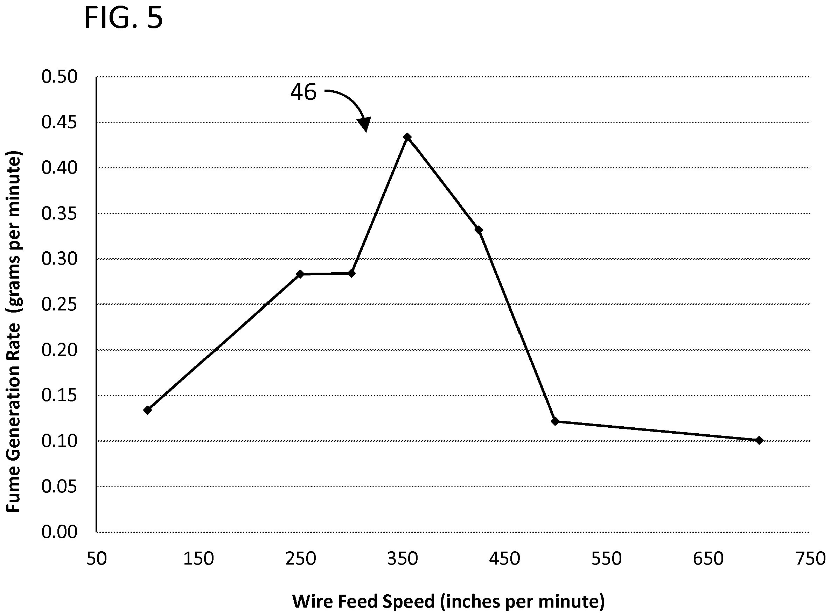

As illustrated by the curve 40 of FIG. 2 and the curve 42 of FIG. 3, respectively, the A3 solid welding electrode embodiment provides a nearly linear trend between the melt-off rate and the welding current and between the melt-off rate and the wire feed speed (i.e., the rate of advancement of the welding consumable toward the workpiece). As illustrated by the curve 44 of FIG. 4, the A3 solid welding electrode embodiment has a similar percentage of the welding electrode converted to fumes at wire feed speeds between approximately 6.25 and approximately 10.80 metres (250 and 425 inches) per minute, a slightly higher percentage of the welding electrode converted to fumes at wire feed speeds less than approximately 6.25 metres (250 inches) per minute, and substantially lower percentages of the welding electrode converted to fumes at wire feed speeds greater than approximately 10.80 metres (425 inches) per minute. As illustrated by the curve 46 of FIG. 5, the A3 solid welding electrode embodiment has a similar fume generation rate at wire feed speeds of approximately 6.25 (250) approximately 7.62 (300), and approximately 10.80 metres (425 inches) per minute, a highest fume generation rate at a wire feed speed of approximately 8.89 metres (350 inches) per minute, and substantially lower fume generation rate at wire feed speeds less than approximately 5.08 metres (200 inches) per minute and at wire feed speeds greater than approximately 12.7 metres (500 inches) per minute.

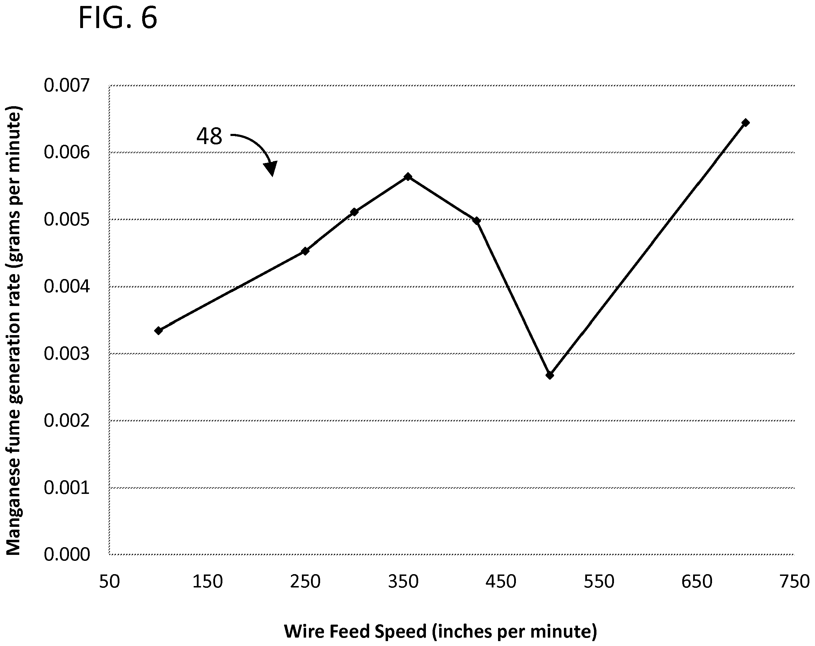

As illustrated by the curve 48 of FIG. 6, the A3 solid welding electrode embodiment provides a low manganese fume generation rate at all wire feed speeds (e.g., between 2.54 and 17.78 metres per minute, i.e. 100 and 700 inches per minute). In certain embodiments, the manganese fume generation rate provided by an embodiment of the disclosed A1 welding alloy (e.g., the A3 solid welding electrode of Table 4) may be less than approximately 0.01 grams per minute, less than approximately 0.009 grams per minute, less than approximately 0.008 grams per minute, less than approximately 0.007 grams per minute, less than approximately 0.0065 grams per minute, less than approximately 0.006 grams per minute, less than approximately 0.005 grams per minute, less than approximately 0.004 grams per minute, or less than approximately 0.003 grams per minute during an arc welding operation, depending on the parameters (e.g., wire feed speed, current, voltage, etc.) of the welding operation. In certain embodiments, the manganese fume generation rate provided by an embodiment of the disclosed A1 welding alloy (e.g., the A3 solid welding electrode of Table 4) may be between approximately 0.001 and approximately 0.01 grams per minute, between approximately 0.002 and approximately 0.007 grams per minute, or between approximately 0.0025 and approximately 0.0065 grams per minute.

**Claims**

1. An arc welding consumable that forms a weld deposit on a steel workpiece during an arc welding operation, wherein the welding consumable comprises:

   - between 0,65 wt% and 0,85 wt% silicon as strengthening agent;
   - one or more grain control agents selected from the group: niobium, tantalum, titanium, zirconium, and boron, wherein the grain control agents comprise greater than 0,06 wt% and less than 0.6 wt% of the welding consumable;
   - between 0,65 wt% and 0,85 wt% nickel;
   - 0.4% or less of manganese;
   - iron as balance to 100%;

   wherein a carbon equivalence (CE) of the welding consumable is less than 0.23, according to the Ito and Bessyo carbon equivalence equation; and wherein the welding consumable provides a manganese fume generation rate less than 0.01 grams per minute during a welding operation.

2. The welding consumable of claim 1, wherein the manganese fume generation rate is less than 0.007 grams per minute during the welding operation, and
preferably less than 0.006 grams per minute during the welding operation.

3. The welding consumable of claim 1 or 2, wherein the welding consumable comprises a solid welding wire, a filler rod, or a stick electrode.

4. The welding consumable of one of the preceding claims, wherein the welding operation comprises a gas metal arc welding (GMAW) operation, a submerged arc welding (SAW) operation, a shielded metal arc welding (SMAW) operation, or a gas tungsten arc welding (GTAW) operation.

5. The welding consumable of one of the preceding claims, comprising copper as a strengthening agent, wherein the welding consumable comprises between 0.001 wt% and approximately 2 wt% copper.

6. The welding consumable of one of the preceding claims, comprising carbon as a strengthening agent, wherein the welding consumable comprises less than 0.12 wt% carbon.

7. The welding consumable of one of the preceding claims, comprising chromium as a strengthening agent, wherein the welding consumable comprises less than approximately 0.8 wt% chromium.

8. The welding consumable of one of the preceding claims, wherein the one or more grain control agents comprise titanium, and wherein the welding consumable comprises less than 0.2 wt% titanium.

9. The welding consumable of one of the preceding claims, wherein the one or more grain control agents comprise zirconium, and wherein the welding consumable comprises less than 0.2 wt% zirconium.

10. The welding consumable of one of the preceding claims, wherein the one or more strengthening agents and the one or more grain control agents comprise boron, and wherein the welding consumable comprises between 0.001 wt% and 0.01 wt% boron.

11. The welding consumable of one of the preceding claims, wherein the CE of the welding consumable is less than 0.2.

12. A method of forming a weld deposit during an arc welding operation, comprising:

advancing a welding consumable according to one of the preceding claims toward a steel workpiece,
establishing an arc between a welding electrode and the steel workpiece; and
melting a portion of the welding consumable and a portion of the steel workpiece to form the weld deposit, wherein the welding operation generates less than approximately 0.01 grams of manganese fumes per minute.

13. The method of claim 12, wherein the welding operation generates between approximately 0.0025 and approximately 0.0065 grams of manganese fumes per minute, and wherein a rate of advancement of the welding consumable toward the steel workpiece is less than approximately 17,8 m (700 inches) per minute, or a welding current is less than approximately 425 A (amps) or a combination thereof.

14. The method of claim 12 or 13, wherein the welding consumable is the welding electrode, and wherein the welding operation is a gas metal arc welding (GMAW) operation, a submerged arc welding (SAW) operation, or a shielded metal arc welding (SMAW) operation, or
wherein the welding electrode is a tungsten welding electrode, wherein the welding consumable is a filler rod, filler wire, or strip cladding, and wherein the welding operation is a gas tungsten arc welding (GTAW) operation.


**Patentansprüche**

1. Lichtbogenschweißzusatz, der während eines Lichtbogenschweißvorgangs ein Schweißgut auf einen Stahlwerkstück bildet, wobei der Schweißzusatz umfasst:

   - zwischen 0,65 Gew.-% und 0,85 Gew.-% Silicium als Verstärkungsmittel;
   - ein oder mehrere Kornregulierungsmittel ausgewählt aus der Gruppe: Niob, Tantal, Titan, Zirkonium und Bor, wobei die Kornregulierungsmittel mehr als 0,06 Gew.-% und weniger als 0,6 Gew.-% des Schweißzusatzes bilden;
   - zwischen 0,65 Gew.-% und 0,85 Gew.-% Nickel;
   - 0,4 % oder weniger Mangan;
   - Eisen als Rest auf 100 %;

   wobei das Kohlenstoffäquivalent (CE) des Schweißzusatzes gemäß der Ito-und-Bessyo-Kohlenstoffäquivalentgleichung weniger als 0,23 beträgt; und
   wobei der Schweißzusatz eine Manganraucherzeugungsrate weniger als 0,01 Gramm pro Minute während eines Schweißvorgangs liefert.

2. Schweißzusatz gemäß Anspruch 1, wobei die Manganraucherzeugungsrate weniger als 0,007 Gramm pro Minute während des Schweißvorgangs beträgt und vorzugsweise weniger als 0,006 Gramm pro Minute während des Schweißvorgangs beträgt.

3. Schweißzusatz gemäß Anspruch 1 oder 2, wobei der Schweißzusatz einen festen Schweißdraht, einen Schweißstab oder eine Stabelektrode umfasst.

4. Schweißzusatz gemäß einem der vorstehenden Ansprüche, wobei der Schweißvorgang einen Metallschutzgasschweißvorgang (MSG-Schweißen), einen Unterpulverschweißvorgang (UP-Schweißen), einen Lichtbogenhandschweißvorgang (E-Handschweißen) oder einen Wolfram-Inergasschweißvorgang (WIG-Schweißen) umfasst.

5. Schweißzusatz gemäß einem der vorstehenden Ansprüche, umfassend Kupfer als Verstärkungsmittel, wobei der Schweißzusatz zwischen 0,001 Gew.-% und etwa 2 Gew.-% Kupfer umfasst.

6. Schweißzusatz gemäß einem der vorstehenden Ansprüche, umfassend Kohlenstoff als Verstärkungsmittel, wobei der Schweißzusatz weniger als 0,12 Gew.-% Kohlenstoff umfasst.

7. Schweißzusatz gemäß einem der vorstehenden Ansprüche, umfassend Chrom als Verstärkungsmittel, wobei der Schweißzusatz weniger als etwa 0,8 Gew.-% Chrom umfasst.

8. Schweißzusatz gemäß einem der vorstehenden Ansprüche, wobei das eine oder die mehreren Kornregulierungsmittel Titan umfassen und wobei der Schweißzusatz weniger als 0,2 Gew.-% Titan umfasst.

9. Schweißzusatz gemäß einem der vorstehenden Ansprüche, wobei das eine oder die mehreren Kornregulierungsmittel Zirkonium umfassen und wobei der Schweißzusatz weniger als 0,2 Gew.-% Zirkonium umfasst.

10. Schweißzusatz gemäß einem der vorstehenden Ansprüche, wobei das eine oder die mehreren Verstärkungsmittel und das eine oder die mehreren Kornregulierungsmittel Bor umfassen und wobei der Schweißzusatz zwischen 0,001 Gew.-% und 0,01 Gew.-% Bor umfasst.

11. Schweißzusatz gemäß einem der vorstehenden Ansprüche, wobei das CE des Schweißzusatzes weniger als 0,2 beträgt.

12. Verfahren zum Bilden eines Schweißguts während eines Lichtbogenschweißvorgangs, umfassend:

   Vorschieben eines Schweißzusatzes gemäß einem der vorstehenden Ansprüche in Richtung zu einem Stahlwerkstück;
   Bilden eines Lichtbogens zwischen einer Schweißelektrode und dem Stahlwerkstück; und
   Schmelzen eines Teils des Schweißzusatzes und eines Teils des Stahlwerkstücks, um das Schweißgut zu bilden, wobei der Schweißvorgang weniger als etwa 0,01 Gramm Manganräuche pro Minute erzeugt.

13. Verfahren gemäß Anspruch 12, wobei der Schweißvorgang zwischen etwa 0,0025 und etwa 0,0065 Gramm Manganräuche pro Minute erzeugt und wobei die Vorschubrate des Schweißzusatzes in Richtung zu dem Stahlwerkstück weniger als etwa 17,8 m (700 Inch) pro Minute beträgt oder der Schweißstrom weniger als etwa 425 A (Amp.) beträgt oder eine Kombination davon.

14. Verfahren gemäß Anspruch 12 oder 13, wobei der Schweißzusatz die Schweißelektrode ist und wobei der Schweißvorgang ein Metallschutzgasschweißvorgang (MSG-Schweißen), ein Unterpulverschweißvorgang (UP-Schweißen) oder ein Lichtbogenhandschweißvorgang (E-Handschweißen) ist oder wobei die Schweißelektrode eine Wolfram-Schweißelektrode ist, wobei der Schweißzusatz ein Schweißstab, ein Schweißdraht oder eine Bandverkleidung ist und wobei der Schweißvorgang ein Wolfram-Inertgasschweißvorgang (WIG-Schweißen) ist.

**Revendications**

1. Consommable de soudage à l'arc qui forme un dépôt de soudage sur une pièce d'acier pendant une opération de soudage à l'arc, le consommable de soudage comprenant :

   - entre 0,65 % en poids et 0,85 % en poids de silicium en tant qu'agent de renforcement ;
   - un ou plusieurs agents de contrôle de grain choisis dans le groupe : niobium, tantale, titane, zirconium, et bore, les agents de contrôle de grain comprenant plus de 0,06 % en poids et moins de 0,6 % en poids du consommable de soudage ;
   - entre 0,65 % en poids et 0,85 % en poids de nickel ;
   - 0,4 % ou moins de manganèse ;
   - le reste étant du fer jusqu'à 100 % ;

   un carbone équivalent (EC) du consommable de soudage étant inférieur à 0,23, selon l'équation d'équivalence de carbone d'Ito et Bessyo ; et le consommable de soudage fournissant un taux de production de fumée de manganèse inférieur à 0,01 gramme par minute pendant une opération de soudage.

2. Consommable de soudage selon la revendication 1, le taux de production de fumée de manganèse étant inférieur à 0,007 gramme par minute pendant l'opération de soudage, et préférablement inférieur à 0,006 gramme par minute pendant l'opération de soudage.

3. Consommable de soudage selon la revendication 1 ou 2, le consommable de soudage comprenant un fil de soudage solide, une baguette de remplissage, ou une électrode enrobée.

4. Consommable de soudage selon l'une des revendications précédentes, l'opération de soudage comprenant une opération de soudage à l'arc sous gaz avec métal d'apport (GMAW), une opération de soudage à l'arc submergé (SAW), une opération de soudage à l'arc métallique protégé (SMAW), ou une opération de soudage à l'arc sous gaz au tungstène (GTAW).

**5.** Consommable de soudage selon l'une des revendications précédentes, comprenant du cuivre en tant qu'agent de renforcement, le consommable de soudage comprenant entre 0,001 % en poids et approximativement 2 % en poids de cuivre.

**6.** Consommable de soudage selon l'une des revendications précédentes, comprenant du carbone en tant qu'agent de renforcement, le consommable de soudage comprenant moins de 0,12 % en poids de carbone.

**7.** Consommable de soudage selon l'une des revendications précédentes, comprenant du chrome en tant qu'agent de renforcement, le consommable de soudage comprenant moins d'approximativement 0,8 % en poids de chrome.

**8.** Consommable de soudage selon l'une des revendications précédentes, l'agent ou les agents de contrôle de grain comprenant du titane, et le consommable de soudage comprenant moins de 0,2 % en poids de titane.

**9.** Consommable de soudage selon l'une des revendications précédentes, l'agent ou les agents de contrôle de grain comprenant du zirconium, et le consommable de soudage comprenant moins de 0,2 % en poids de zirconium.

**10.** Consommable de soudage selon l'une des revendications précédentes, l'agent ou les agents de renforcement et l'agent ou les agents de contrôle de grain comprenant du bore, et le consommable de soudage comprenant entre 0,001 % en poids et 0,01 % en poids de bore.

**11.** Consommable de soudage selon l'une des revendications précédentes, le CE du consommable de soudage étant inférieur à 0,2.

**12.** Procédé de formation d'un dépôt de soudure pendant une opération de soudage à l'arc comprenant :

l'avancée d'un consommable de soudage selon l'une des revendications précédentes vers une pièce d'acier, l'établissement d'un arc entre une électrode de soudage et la pièce d'acier ; et
la fusion d'une partie du consommable de soudage et d'une partie de la pièce d'acier pour former le dépôt de soudure, l'opération de soudage produisant moins d'approximativement 0,01 gramme de fumées de manganèse par minute.

**13.** Procédé selon la revendication 12, l'opération de soudage produisant entre approximativement 0,0025 et approximativement 0,0065 gramme de fumées de manganèse par minute, et une vitesse d'avancée du consommable de soudage vers la pièce d'acier étant inférieure à approximativement 17,8 m (700 pouces) par minute, ou un courant de soudage étant inférieur à approximativement 425 A (ampères) ou une combinaison correspondante.

**14.** Procédé selon la revendication 12 ou 13, le consommable de soudage étant l'électrode de soudage, et l'opération de soudage étant une opération de soudage à l'arc sous gaz avec métal d'apport (GMAW), une opération de soudage à l'arc submergé (SAW), ou une opération de soudage à l'arc métallique protégé (SMAW), ou l'électrode de soudage étant une électrode de soudage de tungstène, le consommable de soudage étant une baguette de remplissage, un fil de remplissage, ou une gaine en bande, et l'opération de soudage étant une opération de soudage à l'arc sous gaz au tungstène (GTAW).

FIG. 1

10

GAS SUPPLY SYSTEM 16

SHIELDING GAS SOURCE(S) 17

32

28

WELDING WIRE FEEDER 14

20

TORCH 18

34

22

26

24

POWER SOURCE 30

WELDING POWER SOURCE 12

FIG. 2

# FIG. 3

FIG. 4

EP 3 180 157 B1

FIG. 5

FIG. 6

*X-axis:* Wire Feed Speed (inches per minute)
*Y-axis:* Manganese fume generation rate (grams per minute)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013177480 A1
- US 2014083981 A1
- US 6608284 B
- US 8119951 B